# EUROPEAN PATENT APPLICATION

(11) **EP 4 557 475 A1**
(43) Date of publication of application: **21.05.2025**
(21) Application number: 23210147.7
(22) Date of filing: 15.11.2023
(51) Int. Cl.: H01M 50/209, H01M 50/249, H01M 50/258

(54) **A BATTERY MODULE PAIR**

(71) Applicant: Volvo Truck Corporation, 405 08 Göteborg (SE)
(72) Inventor: Jonsson, Kasper, 417 57 Göteborg (SE); Lindelöw, Fredrik, 541 94 Skövde (SE); Irannezhad, Mike, 411 20 Göteborg (SE); Vijai Shankar, Bhavani Shankar, 414 78 Göteborg (SE)
(74) Representative: Valea AB

(57) **Abstract**

A battery module pair (6, 7) comprising a first battery module (8) having a first mounting element (12), and a second battery module (10) having a second mounting element (14), wherein each of said mounting elements comprises a mounting flange (16, 18), said mounting flanges extending outwards from a side surface (34, 36) of each of said battery modules, and each of said mounting flanges comprises a mounting hole (20, 22), wherein said first battery module, and said second battery module are arranged such that the mounting holes of said first mounting element and said second mounting element are in alignment, and the first battery module and the second battery module are configured to be fixed in relation to each other at said mounting holes by a fastener (24) such that the mounting flange of the first mounting element and the second mounting element are mechanically coupled.

## Description

### TECHNICAL FIELD

The disclosure relates generally to battery modules. In particular aspects, the disclosure relates to a battery module pair. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It may be advantageous to use mechanical fasteners for the installation of battery modules, for example to provide a secure fastening of the battery module, and in some cases to allow unfastening of the battery moule. Such installation may be a time-consuming task. Therefore, there is a need to develop improved technology relating to installation of battery modules.

### SUMMARY

According to a first aspect of the disclosure, there is provided a battery module pair comprising a first battery module, comprising at least one battery cell, and a second battery module comprising at least one battery cell. The first battery module comprises at least a first mounting element. The second battery module comprises at least a second mounting element. Each of the first mounting element and the second mounting element comprises at least one mounting flange, the mounting flange(s) extending outwards from a side surface of the first battery module and the second battery module, respectively. Furthermore, each of the mounting flanges comprises at least one mounting hole, wherein the first battery module and the second battery module are arranged such that the at least one mounting hole of the at least first mounting element is in alignment with the at least one mounting hole of the at least second mounting element, and the first battery module and the second battery module are configured to be fixed in relation to each other at the mounting holes by a fastener such that the mounting flange of each of the first mounting element and the second mounting element are mechanically coupled.

Optionally in some examples, including in at least one preferred example, the battery modules have a first extension along a first axis, a second extension along a second axis and a third extension along a third axis, said first, second and third axes may be perpendicular to each other.

Optionally in some examples, including in at least one preferred example, the battery modules may each comprise a top surface, a bottom surface, a first side surface, a second side surface, a first end surface, and a second end surface. The top surface and the bottom surface may extend orthogonally to the first axis. The first side surface and the second side surface may extend orthogonally to the second axis between the top surface and the bottom surface. The first end surface and the second end surface may extend orthogonally to the third axis between the top surface and the bottom surface.

Optionally in some examples, including in at least one preferred example, a height direction of the battery modules may be defined as the direction of displacement between the bottom surface and the top surface of the battery modules. Furthermore, a width direction of the battery modules may be defined as the direction of displacement between the first side surface and the second side surface of the battery modules. Furthermore, a length direction of the battery modules may be defined as the direction of displacement between the first end surface and the second end surface of the battery modules.

Optionally in some examples, including in at least one preferred example, the cells of each battery module may be oriented in the same direction such that all the terminals are located at a single surface of the battery modules. Furthermore, the terminals may be located at the top surface or the bottom surface of the first battery module and/or the second battery module. Optionally in some examples, including in at least one preferred example, where the at least one mounting hole of the at least first mounting element is in alignment with the at least one mounting hole of the at least second mounting element, the mounting flange of the first mounting element is arranged in the height direction of the mounting flange of the second battery module.

The first aspect of the disclosure may seek to provide a battery module pair, wherein the battery modules comprise means for being fastened to one another. A technical benefit may include a plurality of cells may be grouped for installation.

Optionally in some examples, including in at least one preferred example, including in at least one preferred example, the first mounting element and the second mounting element each further comprise a side carrier, wherein the side carriers are configured to form the side surfaces of the first battery module and the second battery module. A technical benefit may include that the side carrier provides rigidity to the battery module, and that the same element may be used for both mounting the battery module and forming the side carrier of the battery module, hence a more compact arrangement may be achieved.

Optionally in some examples, including in at least one preferred example, including in at least one preferred example, the mounting flanges extend at an angle to the side carriers. Optionally in some examples, including in at least one preferred example, the mounting flanges may extend at an angle from the side carriers such that the direction in which the mounting flanges extend has a component in a direction normal to the side carriers. Optionally in some examples, including in at least one preferred example, the mounting flanges may extend at an angle between 75° and 105° to the side carriers, for example in at least one example the mounting flanges may be extend perpendicular to the side carriers. In some examples the angle of the first mounting flanges may be supplementary to the mounting angle of the second mounting flanges.

Optionally in some examples, including in at least one preferred example, including in at least one preferred example, the first battery module and the second battery module are arranged in a height direction of the battery module pair. A height direction of the battery module pair may correspond to the height direction of the battery modules, alternatively the height direction of the battery module pair may be inclined with respect to the height direction of at least one of the battery modules. Furthermore, a width direction of the battery module pair may correspond to the width direction of the battery modules alternatively the width direction of the battery module pair may be inclined with respect to the width direction of at least one of the battery modules. Furthermore, a length direction of the battery module pair may correspond to the length direction of the battery modules alternatively the length direction of the battery module pair may be inclined with respect to the length direction of at least one of the battery modules.

Optionally in some examples, including in at least one preferred example, the first battery module and the second battery module are arranged in a height direction of the battery module pair such that the battery cell(s) of the first battery module and the battery cell(s) of the second battery module do not overlap in the height direction. Optionally in some examples, including in at least one preferred example, the first battery module and the second battery module are arranged in a height direction of the battery module pair such that the battery cell(s) of the first battery module and the battery cell(s) of the second battery module overlap in the width direction.

Optionally in some examples, including in at least one preferred example, including in at least one preferred example, the first battery module and the second battery module are arranged in a width direction of the battery module pair. Optionally in some examples, including in at least one preferred example, the first battery module and the second battery module are arranged in the width direction of the battery module pair such that the battery cell(s) of the first battery module and the battery cell(s) of the second battery module do not overlap in the width direction. Optionally in some examples, including in at least one preferred example, the first battery module and the second battery module are arranged in a height direction of the battery module pair such that the battery cell(s) of the first battery module and the battery cell(s) of the second battery module overlap in the height direction.

Optionally in some examples, including in at least one preferred example, including in at least one preferred example, the battery cell(s) of the first battery module, and the battery cell(s) of the second battery module are arranged such that the battery cells are oriented in the same direction. The first battery module and the second battery module may be arranged such that the battery terminals of the first battery terminal and the second battery module are oriented in the same direction. Where the first battery module and the second battery module are arranged in a height direction of the battery module pair such that the battery cells of the first battery module and the second battery module do not overlap in the height direction a technical benefit may include a spacing may be provided between the terminals of the first battery module and the second battery module. Where the first battery module and the second battery module are arranged in a width direction of the battery module pair such that the battery cell(s) of the first battery module and the battery cell(s) of the second battery module overlap in the height direction a technical benefit may include it may be possible to use a single shared component, for example a cooling plate, bus bar, or venting channel, spanning across the first battery module and the second battery module.

Optionally in some examples, including in at least one preferred example, including in at least one preferred example, the battery cell(s) of the first battery module and the battery cell(s) of the second battery module are arranged such that the battery cell(s) of the first battery module and the battery cell(s) of the second battery module are oriented in the opposite direction. The battery pair may further comprise a cooling plate, a busbar for connection of the terminals of each of the battery modules, and/or a venting channel. Where the first battery module and the second battery module are arranged in a height direction of the battery module pair such that the battery cell(s) of the first battery module and the battery cell(s) of the second battery module do not overlap in the height direction a technical benefit may include corresponding sides of the first battery module and the second battery module may be positioned such that they are facing one another such as it may be possible to share components, for example a cooling plate, bus bar, or venting channel. Where the first battery module and the second battery module are arranged in a width direction of the battery module pair such that the battery cell(s) of the first battery module and the battery cell(s) of the second battery module overlap in the height direction a technical benefit may include a spacing may be provided between terminals of the first battery module and the second battery module.

Optionally in some examples, including in at least one preferred example, including in at least one preferred example, the first battery module comprises at least a first mounting element and a further first mounting element, and the second battery module comprises at least a second mounting element and a further second mounting element, wherein the mounting flanges of the first mounting element and the second mounting element extend outwards from a first side surface of the first battery module and the second battery module, respectively, and wherein the mounting flanges of the further first mounting element and the further second mounting element extend outwards from a second side surface of the first battery module and the second battery module, respectively, and the first side surfaces are opposite to the second side surfaces in a width direction of the battery modules. A technical benefit may include an improved fixation of the first battery module and the second battery module may be achieved.

Optionally in some examples, including in at least one preferred example, including in at least one preferred example, the first mounting element and the further first mounting element are structurally identical and/or the second mounting element and the further second mounting element are structurally identical. A technical benefit may include that manufacture of the mounting elements may be simplified.

Optionally in some examples, including in at least one preferred example, including in at least one preferred example, the first mounting element(s) and the second mounting element(s) are structurally identical. A technical benefit may include that manufacture of the mounting elements may be simplified.

According to a second aspect of the disclosure, there is provided a battery compartment comprising at least one battery module pair according to the first aspect of the disclosure wherein the battery compartment further comprises at least one support element fixed in relation to the battery compartment, the at least one support element comprising a support surface having at least one support fixation point formed thereon, wherein the mounting holes of the battery module pair and the fixation point(s) of the support element(s) are in alignment and the battery module pair is fixed to the support element(s) at least at one fixation point by the fastener, such that the mounting flange(s) of the second battery module are sandwiched between the mounting flange(s) of the first battery module and the support surface(s).

Optionally in some examples, including in at least one preferred example, a width direction of the battery compartment may correspond to the width direction of the battery module pair(s) alternatively the width direction of the battery compartment may be inclined with respect to the width direction of at least one battery module pair. Furthermore, the length direction of the battery compartment may correspond to the length direction of the battery module pair(s) alternatively the length direction of the battery module pair may be inclined with respect to the length direction of at least one battery module pair.

The second aspect of the disclosure may seek to provide a battery compartment wherein two battery modules may be fixed both to each other and to a support element using a single fastener. A technical benefit may include a simplified fixation of multiple battery modules in a battery compartment may be achieved.

Optionally in some examples, including in at least one preferred example, including in at least one preferred example, each fixation point comprises a threaded hole, and the fastener comprises a screw, configured to be inserted through said mounting holes and fastened to said threaded hole.

Optionally in some examples, including in at least one preferred example, including in at least one preferred example, each fixation point comprises a threaded post, and the fastener comprises a nut, and said threaded post is configured to be inserted through said mounting holes and fastened by said nut. A technical benefit may include the post may provide a means for maintaining an alignment of the battery modules on the support element before fixation using the nut.

Optionally in some examples, including in at least one preferred example, including in at least one preferred example, the battery compartment further comprises at least one load distribution element, wherein the load distribution element comprises at least one mounting hole, wherein the at least one mounting hole of the load distribution element(s) and the at least one support fixation point are in alignment, and the fastener fixes the load distribution element(s) to the support element(s) such that the mounting flanges of the battery module pair are sandwiched between the load distribution element(s) and the support surface(s). A technical benefit may include the load applied by the fastener may be distributed over the surface of the mounting flanges, therefore the load applied around the mounting holes may be reduced.

Optionally in some examples, including in at least one preferred example, including in at least one preferred example, the battery compartment further comprises at least a first battery module pair and a second battery module pair, wherein the first battery module pair and the second battery module pair are fixed to at least one shared support element. Optionally in some examples, including in at least one preferred example, the first battery module pair and the second battery module pair may be arranged in a width direction of the battery compartment. A technical benefit may include a higher capacity battery compartment may be achieved.

Optionally in some examples, including in at least one preferred example, including in at least one preferred example, the at least one shared support element comprises at least one first support fixation point and at least one second support fixation point, wherein the first battery module pair is fixed via the first support fixation point(s) and the second battery module pair is fixed via the second support fixation point(s). A technical benefit may include a more compact battery compartment may be achieved.

Optionally in some examples, including in at least one preferred example, including in at least one preferred example, at least one second support fixation point and at least one first support fixation point are distanced from one another in a length direction of the battery module pair, and wherein the first battery module pair and the second battery module pair are arranged on the shared support element such that the mounting flanges of the first battery module pair and of the second battery module pair intermesh. A technical benefit may include a more compact battery compartment may be achieved.

Optionally in some examples, including in at least one preferred example, including in at least one preferred example, the corresponding mounting elements of the first battery module pair and the second battery module pair are structurally identical. A technical benefit may include that manufacture of the mounting elements may be simplified.

Optionally in some examples, including in at least one preferred example, including in at least one preferred example, the battery compartment further comprises at least one opening configured such that the battery module pair(s) may be inserted via a height direction of said battery compartment. A technical benefit may include improved access for the fastening of the battery module pair(s).

According to a third aspect of the disclosure, there is provided a vehicle comprising the battery compartment of the second disclosure.

The third aspect of the disclosure may seek to provide a vehicle with a battery compartment wherein two battery modules may be fixed both to each other and to a support element using a single fastener. A technical benefit may include a simplified fixation of multiple battery modules in a battery compartment of a vehicle may be achieved.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary battery compartment according to an example.
**FIG. 3** is a top view of a battery compartment according to the example of **FIG. 2**.
**FIG. 4** is an exemplary battery module pair according to an example.
**FIG. 5** is a top view of a battery module pair according to the example of **FIG. 2**.
**FIG. 6** is an exemplary battery compartment according to an example.
**FIG. 7** is an exemplary battery compartment according to an example.
**FIG. 8** is a top view of a battery compartment according to the example of **FIG. 7**.
**FIG. 9** is an exemplary battery module according to the example of **FIG. 7**.
**FIG. 10** is an exploded view of a battery compartment according to the example of **FIG. 7**.
**FIG. 11** is an exemplary battery module according to an example.
**FIG. 12** is a side view of a battery module according to the example of **FIG. 11**.
**FIG. 13** is an exemplary battery module pair according to the example of **FIG.** 11.
**FIG. 14** is another view of the battery pair of **FIG. 2**, according to an example.

### DETAILED DESCRIPTION

The detailed description set forth below provides information and examples of the disclosed technology with sufficient detail to enable those skilled in the art to practice the disclosure.

It may be advantageous to use mechanical fasteners for the installation of battery modules, for example to provide a secure fastening of the battery module, and in some cases to allow unfastening of the battery moule. Such installation may be a time-consuming task. Therefore, there is a need to develop improved technology relating to installation of battery modules. By providing a battery module pair, wherein the battery modules comprise means for being fastened to one another it may be possible to group a plurality of cells for installation, such that during installation the number of fasteners may be reduced, and the time required to fasten the battery modules may be reduced.

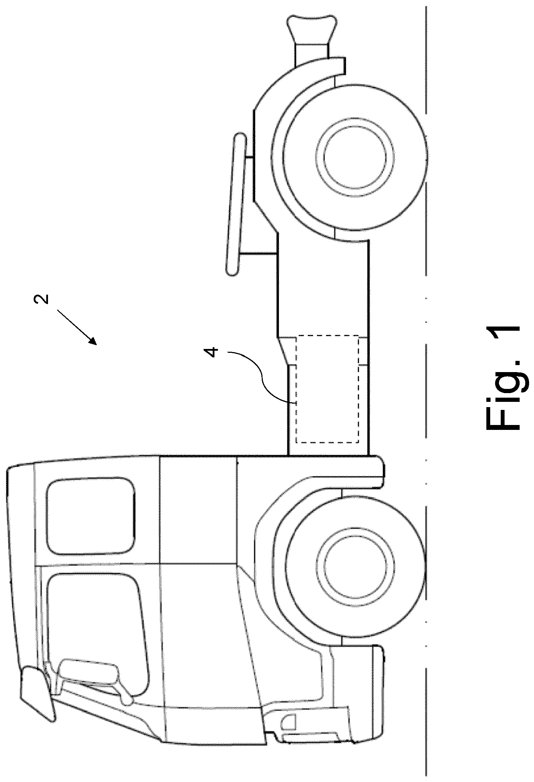

**FIG. 1** is an exemplary vehicle 2 according to an example, in the form of a truck 2, according to an example. Whilst the shown aspect comprises a truck 2, the vehicle may comprise any type of vehicle such as a car, bus, industrial vehicle, marine vessel, aircraft, etc. Furthermore, the battery compartment may be used for non-vehicle applications, for example a stationary installation.

The vehicle 2 comprises a battery compartment 4. The battery compartment 4 may comprise an energy storage as means for propulsion, for example in an electric vehicle. Alternatively, the battery compartment may comprise an energy storage as means for auxiliary functions of the vehicle 2.

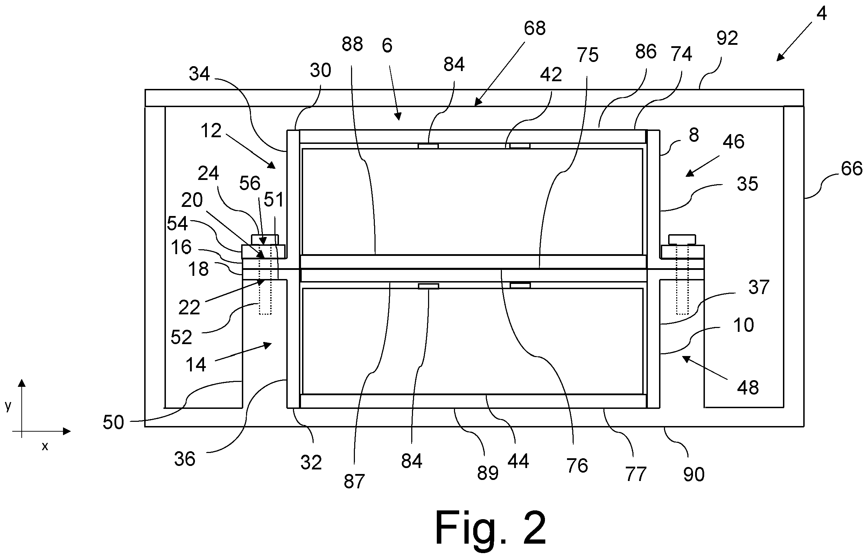

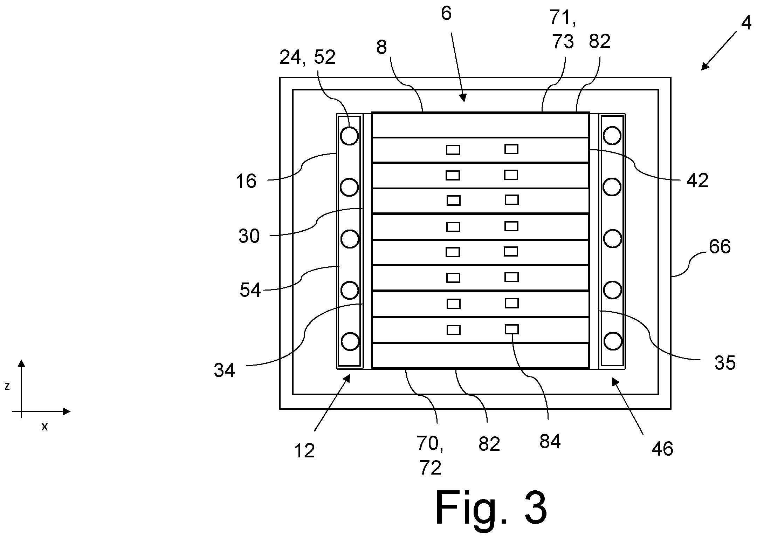

**FIG. 2** is an exemplary battery compartment 4 according to an example. **FIG. 3** is a top view of the battery compartment 4 according to the example of **FIG. 2**. The battery compartment 4 comprises a battery module pair 6. The battery module pair 6 comprises a first battery module 8, and a second battery module 10. Optionally in some examples, including in at least one preferred example, the battery modules have a first extension along a first axis y, a second extension along a second axis x and a third extension along a third axis z, said first, second and third axes y, x, z may be perpendicular to each other.

In the shown example the battery modules 8, 10 each comprise a top surface 78, 80, a bottom surface 76, 77, a first side surface 34, 36, a second side surface 35, 37, a first end surface 70, 72 (see **FIG. 3**), and a second end surface 71, 73. The top surface 78, 80 and the bottom surface 76, 77 extend orthogonally to the first axis y. The first side surface 34, 36 and the second side surface 35, 37 extend orthogonally to the second axis x between the top surface 78, 80 and the bottom surface 76, 77. The first end surface 70, 72 and the second end surface 71, 73 extend orthogonally to the third axis z between the top surface 78, 80 and the bottom surface 76, 77.

In the shown example a height direction of the battery modules 8, 10 may be defined as the direction of displacement between the bottom surface 76, 77 and the top surface 74, 75 of the battery modules 8, 10. Furthermore, a width direction of the battery modules 8, 10 may be defined as the direction of displacement between the first side surface 34, 36 and the second side surface 35, 37 of the battery modules 8, 10. Furthermore, a length direction of the battery modules 8, 10 may be defined as the direction of displacement between the first end surface 70, 72 and the second end surface 71, 73 of the battery modules 8, 10. Therefore, in the shown example the height direction of the battery modules 8, 10 acts parallel to the first axis y, the width direction of the battery modules 8, 10 acts parallel to the second axis y, and the length direction of the battery modules 8, 10 acts parallel to the third axis z.

In the shown example, the first battery module 8, and the second battery module 10, each comprise at least one battery cell 42, 44. The battery cells 42, 44 may comprise prismatic cells 42, 44. Alternatively, the battery cells may comprise pouch cells, or cylindrical cells, or any known type of battery cell. The battery modules 8, 10 may comprise a plurality of cells 42, 44. In the shown example the battery modules 8, 10 comprise a plurality of battery cells 42, 4 stacked in the length direction of the battery modules 8, 10. In some alternative examples the battery cells 42, 44 may be stacked in the width direction, or the height direction of the battery modules 8, 10, or in a combination of stacking directions.

In the shown example, the battery cells 42, 44 may each comprise a plurality of terminals 84. In the shown example, the battery cells 42 of first battery module 8 and the battery cells 44 of the second battery module 10 are arranged such that the battery cells 42, 44 are oriented in the same direction, wherein the direction comprises the height direction of the battery modules 8, 10, such that all the terminals 84 are located at the corresponding surface of the battery modules 8, 10. Furthermore, all the terminals 84 are located at the top surfaces 74, 75 of the battery modules 8, 10. Optionally in some examples, including in at least one preferred example, all the terminals 84 may be located at the bottom surfaces 76, 77 of the battery modules 8, 10.

In the shown example, the first battery module 8 comprises a first mounting element 12, and the second battery module comprises a second mounting element 14. Furthermore, each of the first mounting element 12 and the second mounting element 14 comprises at least one mounting flange 16, 18. In the shown example the mounting flanges 16, 18 extend outwards from the first side surfaces 34, 36 of the first battery module 8 and the second battery module 10, respectively.

In the shown example, the first battery module 8 further comprises a further first mounting element 46, and the second battery module 10 comprises a further second mounting element 48. The mounting flanges 16, 18 of the further first mounting element 46 and the further second mounting element 48 extend outwards from the second side surface 35, 37 of the first battery module 8 and the second battery module 10, respectively.

Furthermore, each of the mounting flanges 16, 18 comprise at least one mounting hole 20, 22. In the shown example, each of the mounting flanges 16, 18 comprises a plurality of mounting holes 20, 22. In the shown example the mounting holes 20, 22 extend in the height direction of the battery modules 8, 10. In alternative examples the mounting holes 20, 22 may extend in a direction inclined to the height direction of the battery modules 8, 10. Furthermore, the first battery module 8, and the second battery module 10 are arranged such that the mounting holes 20 of the mounting elements 12, 46 are in alignment with the mounting holes 22 of the second mounting elements 14, 48. In alternative examples, the mounting flange 18 of the second battery module 10 may comprise at least one additional hole which does not align with a mounting hole 22 of the mounting flange 16 of the first battery module 8, for example, such that the second battery module 10 may be fixed to another element before a first battery module 8 is placed in alignment. Furthermore, in at least some alternative examples the mounting flanges 16, 18 may comprise complimentary grooves, notches, etc., to improve the ease with which the mounting holes 20, 22 of the first battery module 8 and the second battery module 10 are aligned.

In at least some alternative examples the first battery module 8 may comprise more than one first mounting elements 12, and/or further first mounting elements 46, and the second battery module may comprise more than one second mounting elements 14 and/or further second mounting elements 48. Where a battery module 8, 10 comprises more than one of each mounting element 12, 14, 46, 48, the more than one mounting elements 12, 14, 46, 48 may be attached to each other using mechanical fixing means, such as screws, bolts, clamps, straps, etc., or adhesive, welding, etc., or any known fixation means. In at least some alternative examples the more than one mounting elements are not attached to each other, for example the mounting elements may be spaced from one another, for example in the height direction and/or the length direction of the battery modules 8, 10.

Furthermore, in at least some alternative examples the mounting elements 12, 14, 46, 48 may comprise more than one mounting flange 16, 18. For example where a mounting element 12, 14, 46, 48 comprises more than one mounting hole 20, 22, each of said mounting holes 20, 22 may be formed on a separate mounting flange 16, 18. In at least some alternative examples each mounting flange may have any number of mounting holes 20,22.

Furthermore, the first battery module 8 and the second battery module 10 are configured to be fixed in relation to each other at the mounting holes 20, 22 by a fastener 24 such that the mounting flange 16, 18 of each of the first mounting element 12, 46 and the second mounting element 14, 48 are mechanically coupled. In the shown example the fastener 24 comprises a screw 24.

In the shown example, the first battery module 8 comprises a further first mounting element 46, and the second battery module 10 comprises a further second mounting element 48. The mounting flanges 16, 18 of the further first mounting element 46 and the further second mounting element 48 extend outwards from a second side surface 35, 37 of the first battery module 8 and the second battery module 10, respectively.

In the shown example, the first mounting element 12 and the further first mounting element 46 are structurally identical, such that only a single type of mounting element needs to be manufactured for both of the mounting elements 12, 46. Furthermore the second mounting element 14 and the further second mounting element 48 are structurally identical, such that only a single type of mounting element needs to be manufactured for both of the mounting elements 14, 48.

In the shown example, the first mounting element 12 of the first battery module 8, and the second mounting element 14 of the second module 10 are structurally identical, such that only a single type of mounting element needs to be manufactured for both of the mounting elements 12, 14. Furthermore, the further first mounting element 46 of the first battery module 8, and the further second mounting element 48 of the second module 10 are structurally identical, such that only a single type of mounting element needs to be manufactured for both of the mounting elements 46, 48. Furthermore, in the shown example only a single type of mounting element needs to be manufactured for all of the mounting elements 12, 14, 46, 48.

In the shown example, the first mounting element 12, 46 and the second mounting element 14, 48 each further comprise a side carrier 30, 32, wherein the side carriers 30, 32 are configured to form the side surfaces 34, 35, 36, 37 of the first battery module 8 and the second battery module 10. The side carriers 30, 32 may provide structural rigidity to the battery modules 8, 10. In the shown example mounting flanges 16, 18 extend perpendicular to the side carriers 30, 32. In alternative examples the mounting flanges 16, 18 may extend at any angle to the side carriers 30, 32, for example the mounting flanges 16, 18 may extend at an angle between 75° and 105°. In some examples the angle of the first mounting flanges 16 may be supplementary to the mounting angle of the second mounting flanges 18.

In the shown example, the first battery module 8, and the second battery module 10, further comprise end plates 82, 83 wherein said end plates 82, 83 are configured to form the end surfaces 70, 71, 72, 73 of the first battery module 8 and the second battery module 10. The end plates 82 of the first battery module 8 may be attached to one another such that they may be configured to compress the battery cells 42 of the first battery module 8. Furthermore, the end plates 83 of the second battery module 10 may be attached to one another such that they may be configured to compress the battery cells 44 of the second battery module 10. In at least some examples the end plates 82 may be attached to one another via the mounting elements 12, 14, 46, 48 such that the battery cells 42, 44 are compressed. In alternative examples, an additional element such as a strap may be used to compress the end plates 82 and battery cells 42, 44. The end plates 82 and the mounting elements 12, 14, 46, 48 may be attached using mechanical fixing means, such as screws, bolts, clamps, straps, etc., or adhesive, weld, etc., or any known fixation means.

As well as providing structural strength to the battery modules 8, 10, in some examples the end plates 82, and mounting elements 12, 14, 46, 48 may be configured to provide additional properties, such as impact absorption means, for example by including plastically and/or elastically deformable elements. Furthermore, in at least some examples it may be advantageous for the end plates 82, and/or mounting elements 12, 14, 46, 48 to comprise elements having heat insulating and/or heat conducting properties.

In the shown example the first battery module 8, and the second battery module 10 are arranged in a height direction of the battery module pair 6. The height direction of the battery module pair 6 corresponds to the height direction of the battery modules 8, 10. Furthermore, a width direction of the battery module pair 6 corresponds to the width direction of the battery modules 8, 10. Furthermore, a length direction of the battery module pair 6 corresponds to the length direction of the battery modules 8, 10. Furthermore, the battery cells 42 of the first battery module 8 do not overlap with the battery cells 44 of the second battery module 10 in the height direction of the battery module pair 6.

In the shown example the first battery module 8, and the second battery module 10 further comprise a top plate 86, 87 and a bottom plate 88, 89 configured to form the top surface 74, 75 and the bottom surface 76, 77 of the battery modules 8, 10, respectively. In the shown example where the battery terminals 84 are located at the top surfaces 74, 75 the top plates 86,87 may comprise a busbar element configured to connect the terminals 84 of each of the battery modules 84. Furthermore, a portion of the busbars may extend beyond the top surfaces 74, 75, for example to one of the end surfaces 70, 71, such that the busbar of the first battery module 8 and of the second battery module 10 may be connected to each other, and/or to other components, for example of the vehicle. Furthermore, the top plates 86, 87 may at least partially form gas venting channels. Furthermore, in the shown example where the battery terminals 84 are located at the top surfaces 74, 75, the bottom plates 88, 89 may comprise cooling means, for example bottom plates 88, 89 may comprise fluid channels for the circulation of coolant.

In the shown example the battery compartment 4 comprises two support elements 50 fixed in relation to the battery compartment 4. Furthermore, each of the support elements 50 comprise a support surface 51 having a number of support fixation points 52 formed thereon. In the shown example the support surfaces extend orthogonally to the first axis y, forming a top surface of the support elements 50, wherein said support surfaces 51 correspond to a top surface 74, 75 of the battery modules 8, 10, such that it extends in the width direction, and the length direction, of the battery module pair 6. In at least some further examples the support surfaces 51 may be inclined in relation to the width direction of the battery module pair 6, for example where the mounting flanges 16, 18 extend non-perpendicularly to the side carriers 30, 32 the support surfaces 51 may extend parallel to the mounting flanges 16, 18.

In the shown example the fixation points 52 are arranged along the length direction of the battery module pair 6. In at least some further examples the fixation points 52 may be distributed along the support surfaces 51 such that they are spaced in the width direction of the battery module pair 6. In the shown example each of the mounting holes 20, 22 of the battery module pair 6 and the fixation points 52 of the support elements 50, 58 are in alignment and the battery module pair 6 is fixed to the support elements 50, 58 at each of the fixation points 52 by a fastener 24, such that the mounting flanges 18 of the second battery module 10 are sandwiched between the mounting flanges 16 of the first battery module 8 and the support surfaces 51, 59.

In at least some further examples the support surfaces 51 may have any number of fixation points 52, as long as the battery module pair 6 may be fixed to at least one support element 50, 58 via at least one fixation point 52 by a fastener 24.

In the shown example the fixation points 52 comprise a threaded hole, and the fastener 24 is configured to be inserted through the mounting holes 20, 22 and fastened to the threaded hole. In the shown example the threaded hole extends in the height direction of the battery module pair 6. In at least some further examples the threaded holes extend at an inclination to the height direction, of the battery module pair 6.

In the shown example the battery compartment 4 comprises two load distribution elements 54. In at least some alternative examples the number of load distribution elements may be equal to the number of support elements, or alternatively any number of load distribution elements may be used. In the shown example the load distribution elements 54 are formed as a bar shaped element. In at least some alternative examples the load distribution element 54 may have an alternative shape, such as a semi-cylindrical shape, or a trapezoidal prism. Furthermore, in the shown example the load distribution elements 54 comprise a number of mounting holes 56. The mounting holes 56 of the load distribution elements 54 and the support fixation points 52 are in alignment, and the fastener 24 fixes the load distribution elements 54 to the support elements 50 such that the mounting flanges 16, 18 of the battery module pair 6 are sandwiched between the load distribution elements 54 and the support surfaces 51. In at least some alternative examples the load distribution elements 54 may have any number of mounting holes 56, as long as the load distribution element 54 is fixed to the support elements 50 such that the mounting flanges 16, 18 of the battery module pair 6 are sandwiched between the load distribution elements 54 and the support surfaces 51.

In the shown example the battery compartment 4 comprises a housing 66, the housing 66 comprising four walls and a bottom surface 90. In at least some alternative examples the housing 66 may comprise any number of walls, having any shape. In at least some alternative examples the battery compartment 4 may comprise no housing. The housing has an opening 68 configured such that the battery module pair 6 via the height direction of the battery compartment 4. The opening 8 may be closed by means of a lid 92.

In at least some examples the battery compartment 4 may comprise additional components, wherein said additional components may be related to the function of the battery modules 8, 10, for example the battery compartment may contain a battery control unit, fire extinguishing means, sensors, and the like. Furthermore, in at least some examples the battery compartment may comprise additional components non-related to the function of the battery modules 8, 10.

In the shown example the support elements 50, 58 are integrally formed with the bottom surface 90. In at least some alternative examples the support elements 50, 58 may be integrally formed with at least one of the walls of the housing 66. Furthermore, in at least some alternative examples the support element 50 may be integrally formed with the walls of the housing 66 such that the support elements 50 are suspended above the bottom surface 90 of the battery compartment 4. In at least some alternative examples the support elements 50, 58 may be formed separately to the housing 66, instead being attached to the bottom surface 90 and/or the walls of the housing 66 using any known fixing means, such as screws, bolts, adhesive, welding, etc.

In the shown example the bottom plate 89 of the second battery module 10 is in contact with the bottom surface 90 of the battery compartment 4. In at least some alternative embodiments a space is formed between the bottom plate 89 of the second battery module 10 and the bottom surface 90 of the battery compartment 4.

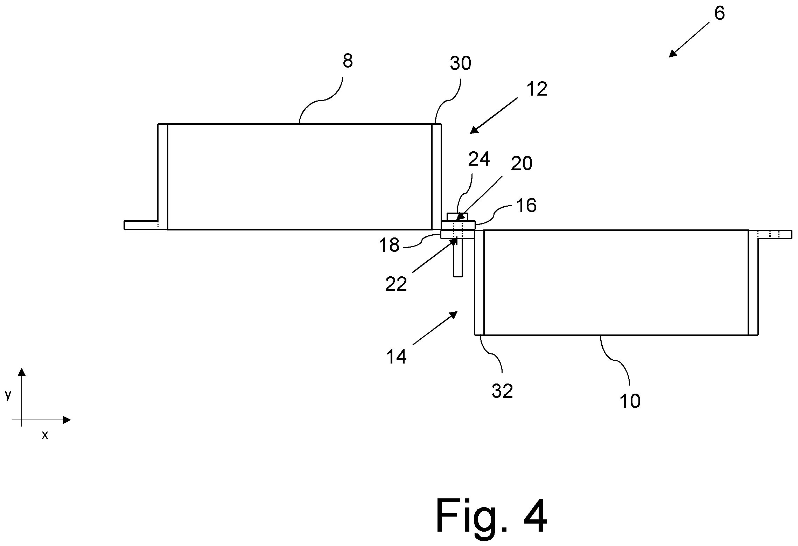

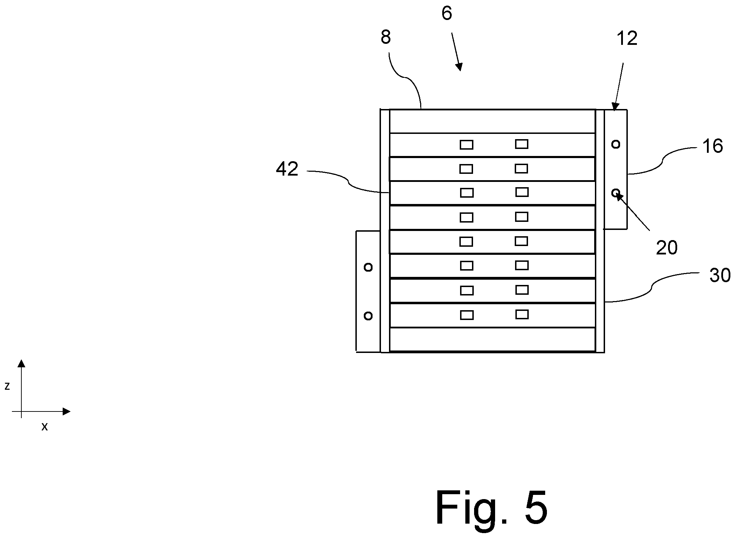

**FIG. 4** is an exemplary battery module pair according to an example. **FIG. 5** is a top view of a battery module pair according to the example of **FIG. 4****.** In the shown example the first battery module 8, and the second battery module 10 are arranged in both the height direction, and the width direction of the battery module pair 6. Furthermore, in the shown example the battery cell of the battery modules 8, 10 do not overlap in the height direction, or the width direction of the battery module pair 6.

In the shown example each of the battery modules 8, 10 comprises a mounting flange 16, 18 extending only partially along the side carriers 30, 32 in the length direction of each battery module 8, 10. In alternative embodiments the battery modules 8, 10 may have any number of mounting flanges. The extension of each mounting flange 16, 18 along the side carriers 30, 32 in the length direction of each battery module 8, 10 is equal to half the extension of each of the side carriers 30, 32 in the length direction of each battery module 8, 10.

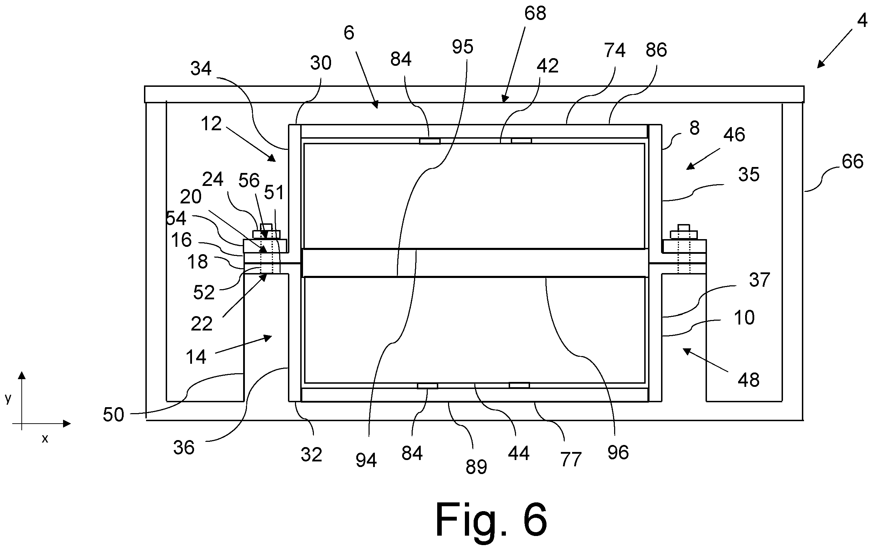

**FIG. 6** is an exemplary battery compartment according to an example. In the shown example the battery cells 42 of the first battery module 8, and the battery cells 44 of the second battery module 10 are arranged such that the battery cells 42 of the first battery module 8 and the battery cells 44 of the second battery module 10 are oriented in the opposite direction. Furthermore, the direction of orientation of the battery cells 44 of the first battery module 8 comprises the height direction of the first battery module 8, such that all of the terminals 84 of the first battery module 8 are located at the top surface 74 of the first battery module 8, hence all of the terminals 84 of the second battery module 10 are located at the bottom surface 77 of the second battery module 10. In at least some alternative examples the battery cells 44 may be oriented such that the terminals 84 of the first battery module 8 may be located at the bottom surface 76 of the first battery module 8, and the terminals 84 of the second battery module 10 may be located at the top surface 75 of the second battery module 10.

In the shown example the first battery module 8 comprises a top plate 86, configured to form the top surface 74 of the battery module 8, and the second battery module 10 comprises bottom plate 89 configured to form the bottom surface 77 of the second battery module 10. Furthermore, in the shown example where the battery terminals 84 of the first battery module 8 are located at the top surface 74, and the battery terminals 84 of the second battery module 10 are located at the bottom surface 77, the top plate 86 of the first battery module 8, and the bottom plate 89 of the second battery module 10 may comprise a busbar element configured to connect the terminals 84 of each of the battery modules 8, 10. Furthermore, the top plates 86 may at least partially form gas venting channels. In at least some alternative examples the battery cells 44 may be oriented such that the terminals 84 of the first battery module 8 may be located at the bottom surface 76 of the battery module 8, and the terminals 84 of the second battery module 10 may be located at the top surface 75 of the battery module 10 the top plate 86 of the first battery module 8, and the bottom plate 89 of the second battery module 10 may comprise cooling means, for example they may comprise fluid channels for the circulation of coolant.

In the shown example the first battery module 8 comprises a battery cell bottom surface 94, on a surface of the battery cell 44 opposite to the battery terminals 84, and the second battery module 8 comprises a battery cell top surface 95, on a surface of the battery cell 44 opposite to the battery terminals 84. A shared plate 96 is located between the battery cell bottom surface 94 and the battery cell top surface 95. The shared plate 96 may be attached to the first battery module 8 or to the second battery module 10, using any known fixing means, such that the shared plate may form a bottom surface of the first battery module, or a top surface of the second battery module 10, respectively. In at least some examples the bottom surface of the first battery module 10 may be formed by the battery cell bottom surface 94, and/or the top surface of the second battery module 10 may be formed by the battery cell top surface 95. In at least some examples, where the bottom surface of the first battery module 10 is formed by the battery cell bottom surface 94, and the top surface of the second battery module 10 is formed by the battery cell top surface 95 the shared plate 96 may be a separate component. Where the shared plate 96 is formed as a separate component, the shared plate 96 may be fixed in place when the first battery module 8 is fixed to the second battery module 10. Furthermore, where the shared plate 96 is formed as a separate component the shared plate 96 may comprise mounting flanges, comprising mounting holes, such that the mounting holes of the shared plate may be aligned with the mounting holes of the first battery module 8 and the second battery module 10, and the mounting flange of the shared plate 96 may be sandwiched between the mounting flange 16 of the first battery module 8 and the mounting flange 18 of the second battery module 10.

In the shown example the shared plate 96 may comprise a cooling means, for example the shared plate 96 may comprise fluid channels for the circulation of coolant. In at least some alternative examples the battery cells 44 may be oriented such that the terminals 84 of the first battery module 8 may be located at the bottom surface 76 of the battery module 8, and the terminals 84 of the second battery module 10 may be located at the top surface 75 of the battery module 10 the top plate 86 of the first battery module 8, and the bottom plate 89 of the second battery module 10 may comprise a busbar element configured to connect the terminals 84 of each of the battery modules 8, 10. Furthermore, the shared plate 96 may at least partially form gas venting channels.

Furthermore, in the shown example each of the fixation points 52 comprise a threaded post, and the fastener 24 comprises a nut, and the threaded post is configured to be inserted through the mounting holes 20, 22 and fastened by the nut.

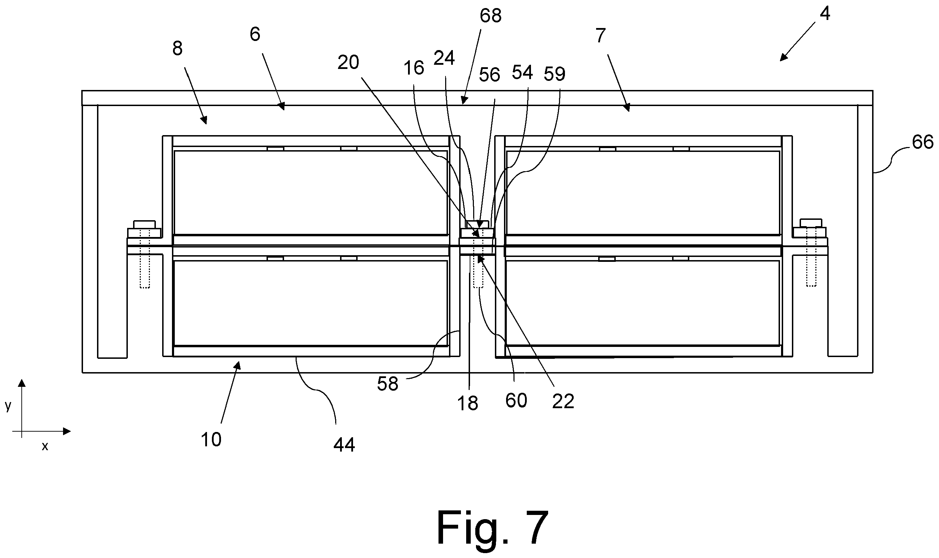

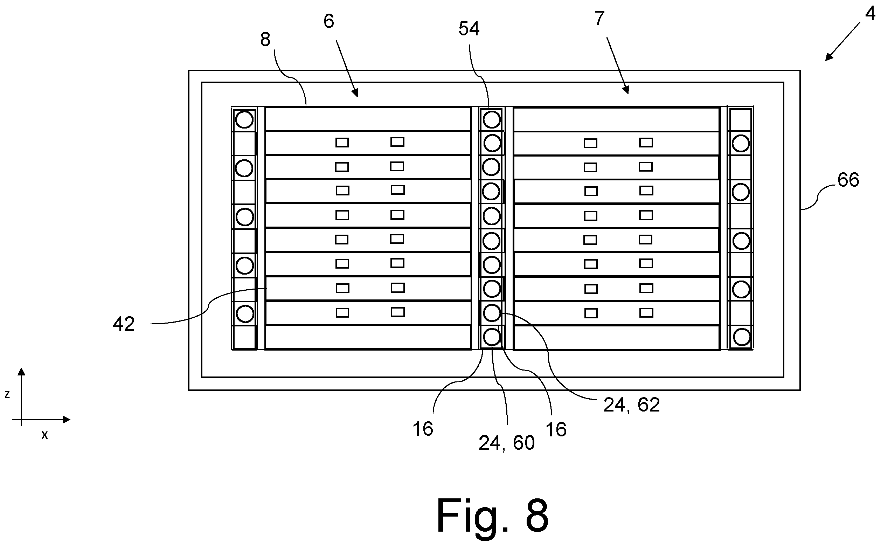

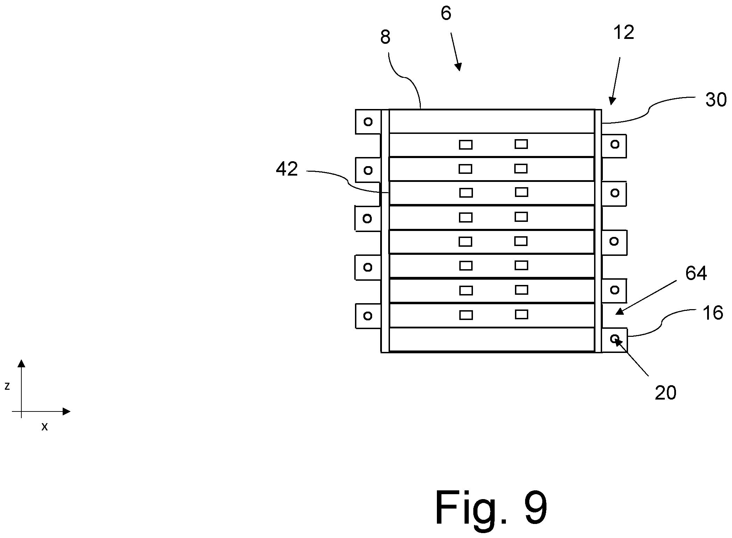

**FIG. 7** is an exemplary battery compartment 4 according to an example. **FIG. 8** is a top view of a battery compartment 4 according to the example of **FIG. 7**. Furthermore, **FIG. 9** is an exemplary battery module according to the example of **FIG. 7****.** In the shown example the battery compartment 4 comprises a first battery module pair 6 and a second battery module pair 7. Furthermore, in the shown example the first battery module pair 6 and the second battery module pair 7 are arranged next to each other in the width direction X of the battery compartment. In at least some alternative examples, for example where the battery module pair is configured as described with reference to **FIG. 6** he first battery module pair 6 and the second battery module pair 7 may be arranged such that the first battery module 8 of the first battery module pair 6 is arranged above the second battery module 10 of the second battery module pair 7, and the first battery module 8 of the second battery module pair 7 is arranged above the second battery module 10 of the first battery module pair 6.

The first battery module pair 6 and the second battery module pair 7 are fixed to at least one shared support element 58. Furthermore, the at least one shared support element 58 comprises at least one first support fixation point 60 and at least one second support fixation point 62, wherein the first battery module pair 6 is fixed via the first support fixation point(s) 60 and the second battery module pair 7 is fixed via the second support fixation point(s) 62.

In the shown example the at least one second support fixation point 62 and at least one first support fixation point 60 are distanced from one another in a length direction of the battery module pair 6, 7, and wherein the first battery module pair 6 and the second battery module pair 7 are arranged on the shared support element 58 such that the mounting flanges 16, 18 of the first battery module pair 6 and of the second battery module pair 7 intermesh. In at least some alternative examples the at least one second support fixation point 62 and at least one first support fixation point 60 are distanced from one another in a width direction of the battery module pair 6, 7, such that it is not necessary that the mounting flanges 16, 18 of the first battery module pair 6 and the mounting flanges 16, 18 of the second battery module pair 7 intermesh.

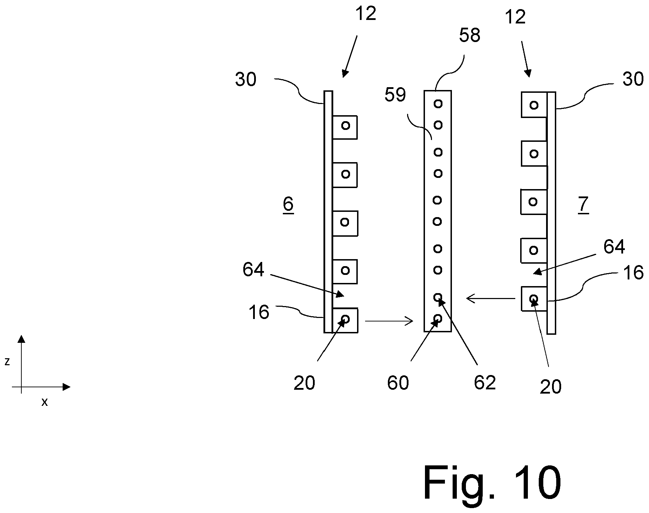

In the shown example the mounting flanges 16, 18 of the battery module pairs 6, 7 extend only from a portion of the mounting elements 30 along the length direction Z thereof, such that each of the mounting flanges extend over only a portion of the support surface 59 of the shared support element 58 (See also **FIG. 10** for an exploded view). Therefore, in the shown example, at least a space is formed adjacent to each of the flanges 16 of the first battery module pair 6, in the length direction Z of the battery compartment 4, for accommodating the flanges 16, 18 of the second battery module pair 7, and at least a space is formed adjacent to each of the flanges 16, 18 of the second battery module pair 7, in the length direction Z of the battery compartment 4, for accommodating the flanges 16, 18 of the first battery module pair 6.

In the shown example the battery compartment 4 comprises a single shared support element 58. In at least some alternative examples the battery compartment 4 may comprise more than one shared support element 58, such that a battery module pair 6, 7 may be fixed to the shared support element 58 at a first mounting element 12. And at least one of the battery module pairs 6, 7 may be fixed to a further shared support element via at least a further first mounting element 46 or a further second mounting element 48 thereof, such that the at least one battery module pair 6, 7, may be attached to a further battery module pair.

In the shown example the first mounting element 12 and the further first mounting element 46 of each battery module are structurally identical. Furthermore, in the shown example the second mounting element 14 and the further second mounting element 48 of each battery module 8, 10 are structurally identical. Furthermore, in the shown example the corresponding mounting elements 12, 14, 46, 48 of the first battery module pair 6 and the second battery module pair 7 are structurally identical.

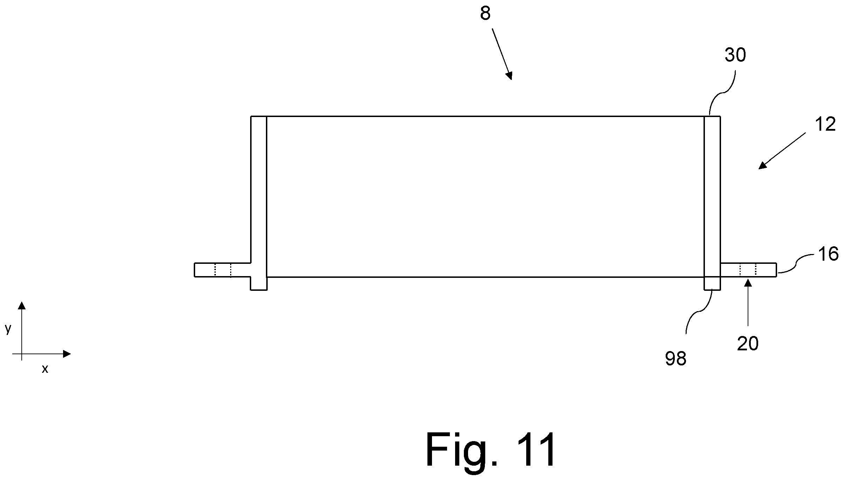

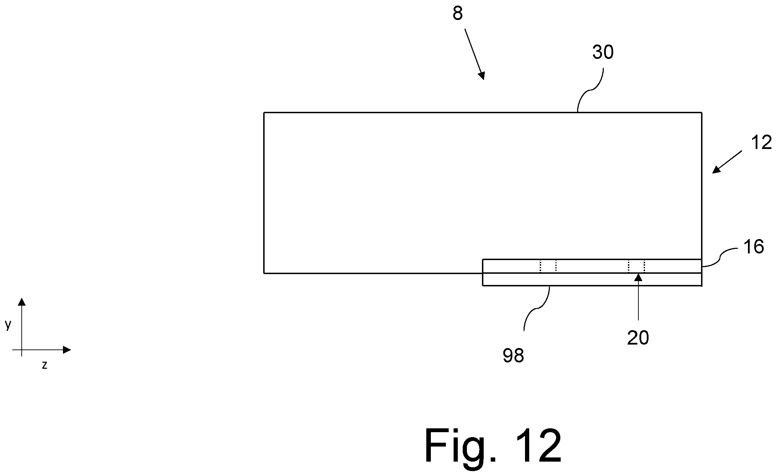

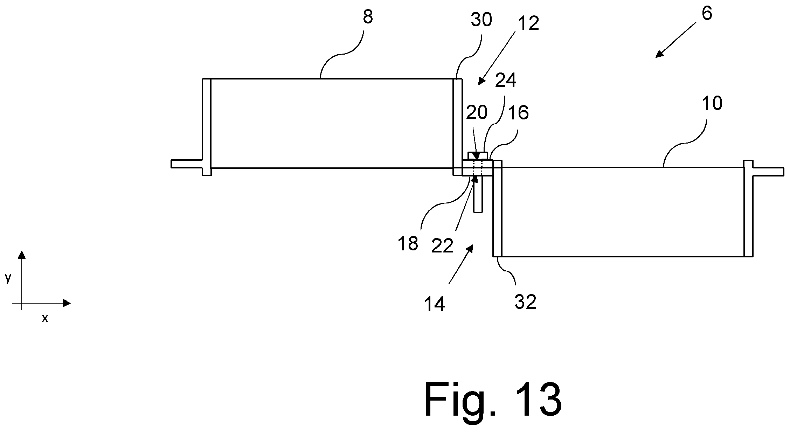

**FIG. 11** is an exemplary battery module 8 according to an example. **FIG. 12** is a side view of a battery module 8 according to the example of **FIG. 11**. In the shown example a similar configuration may be achieved as described with reference to **FIG. 4**, whereby a battery module pair 6 is formed by the first battery module 8, and the second battery module 10 arranged in both the height direction, and the width direction of the battery module pair 6, and whereby the battery cell of the battery modules 8, 10 do not overlap in the height direction, or the width direction of the battery module pair 6 (See **FIG. 13**).

In the shown example the mounting elements 12 of the battery module 8 further comprises an extending portion 98, extending in the same plane as the side carrier 30, and extending below the mounting flange 16 in the height direction of the battery module 8, wherein the extension of the extending portion 98 in the height direction is equal to the thickness of the mounting flange in the height direction of the battery module 8.

By using such a mounting element for a battery module 8 and forming a battery module pair 6 from a first battery module 8, and a second battery module 10 comprising a second mounting element 18, structurally identical to the first mounting element 16, it is possible to form a battery compartment comprising a first battery module pair and a second battery module pair, wherein all of the mounting elements are structurally identical. For the shown mounting element 12, not only will the mounting flanges 16, 18 of the first battery module pair 6 and the second battery module pair 7 intermesh, but also the extending portion 98 and the side carriers 30, 32 of the first battery module pair 6 and the second battery module pair 7 may intermesh.

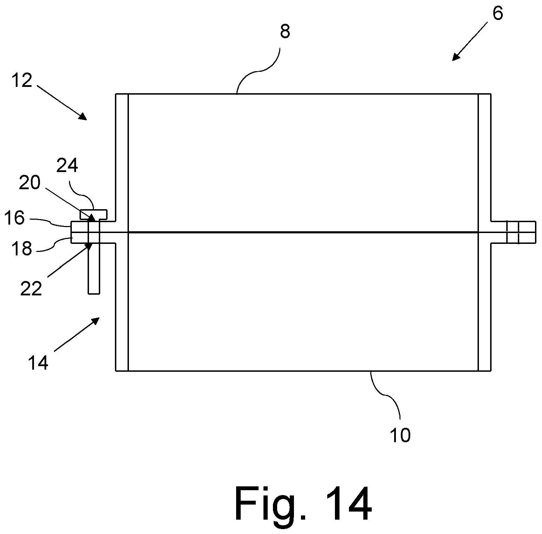

**FIG. 14** is another view of the battery pair of **FIG. 2**, according to an example.

**Example 1:** a battery module pair 6, 7 comprising a first battery module 8, comprising at least one battery cell 42, a second battery module 10, comprising at least one battery cell 44, wherein the first battery module 8 comprises at least a first mounting element 12, 46, and the second battery module comprises at least a second mounting element 14, 48, wherein each of the first mounting element 12, 46 and the second mounting element 14, 48 comprises at least one mounting flange 16 , 18, the mounting flange(s) 16, 18 extending outwards from a side surface 34, 35, 36, 37 of the first battery module 8 and the second battery module 10, respectively, and wherein each of the mounting flanges 16, 18 comprises at least one mounting hole 20, 22, wherein the first battery module 8, and the second battery module 10 are arranged such that the at least one mounting hole 20 of the at least first mounting element 12, 46 is in alignment with the at least one mounting hole 22 of the at least second mounting element 14, 48, and the first battery module 8 and the second battery module 10 are configured to be fixed in relation to each other at the mounting holes 20, 22 by a fastener 24 such that the mounting flange 16, 18 of each of the first mounting element 12, 46 and the second mounting element 14, 48 are mechanically coupled.

**Example 2:** the battery module pair 6, 7 of example 1, wherein the first mounting element 12, 46 and the second mounting element 14, 48 each further comprise a side carrier 30, 32, wherein the side carriers 30, 32 are configured to form the side surfaces 34, 35, 36, 37 of the first battery module 8 and the second battery module 10.

**Example 3:** the battery module pair 6, 7 of example 2, wherein the mounting flanges 16, 18 extend at an angle to the side carriers (30, 32).

**Example 4:** the battery module pair 6, 7 of any of examples 1-3, wherein the first battery module 8, and the second battery module 10 are arranged in a height direction of the battery module pair 6, 7.

**Example 5:** the battery module pair 6, 7 of any of examples 1-4, wherein the first battery module 8, and the second battery module 10 are arranged in a width direction of the battery module pair 6, 7.

**Example 6:** the battery module pair 6, 7 of examples 1-5, wherein the battery cell(s) 42 of the first battery module 8 and the battery cell(s) 44 of the second battery module 10 are arranged such that the battery cells 42, 44 are oriented in the same direction.

**Example 7:** the battery module pair 6, 7 of examples 1-5, wherein the battery cell(s) 42 of the first battery module 8, and the battery cell(s) 44 the second battery module 10 are arranged such that the battery cells 42 of the first battery module 8 and the battery cells 44 of the second battery module 10 are oriented in the opposite direction.

**Example 8:** the battery module pair 6, 7 of any of examples 1-7, wherein the first battery module 8 comprises at least a first mounting element 12 and a further first mounting element 46, and the second battery module 10 comprises at least a second mounting element 14 and a further second mounting element 48, wherein the mounting flanges 16, 18 of the first mounting element 12 and the second mounting element 14 extend outwards from a first side surface 34, 36 of the first battery module 8 and the second battery module 10, respectively, and wherein the mounting flanges 16, 18 of the further first mounting element 46 and the further second mounting element 48 extend outwards from a second side surface 35, 37 of the first battery module 8 and the second battery module 10, respectively, and the first side surfaces 34, 36 are opposite to the second side surfaces 35, 37 in a width direction of the battery modules 8, 10.

**Example 9:** the battery module pair 6, 7 of example 8, wherein the first mounting element 12 and the further first mounting element 46 are structurally identical and/or the second mounting element 14 and the further second mounting element 48 are structurally identical.

**Example 10:** the battery module pair 6, 7 of any of examples 1-9, wherein the first mounting element(s) 12, 46 and the second mounting element(s) 14, 48 are structurally identical.

**Example 11:** A battery compartment 4 comprising at least one battery module pair 6, 7 according to any of examples 1-9 wherein the battery compartment 4 further comprises at least one support element 50, 58 fixed in relation to the battery compartment 4, the at least one support element 50, 58 comprising a support surface 51, 59 having at least one support fixation point 52, 60, 62 formed thereon, wherein the mounting holes 20, 22 of the battery module pair 6, 7 and the fixation point(s) 52, 60, 62 of the support element(s) 50, 58 are in alignment and the battery module pair 6, 7 is fixed to the support element(s) 50, 58 at least at one fixation point 52, 60, 62 by the fastener 24, such that the mounting flange(s) 18 of the second battery module 10 are sandwiched between the mounting flange(s) 16 of the first battery module 8 and the support surface (s) 51, 59.

**Example 12:** the battery compartment 4 of example 11, wherein each fixation point 52, 60, 62 comprises a threaded hole, and the fastener 24 comprises a screw, configured to be inserted through the mounting holes 20, 22 and fastened to the threaded hole.

**Example 13:** the battery compartment 4 of example 12, wherein each fixation point 52, 60, 62 comprises a threaded post, and the fastener 24 comprises a nut, and the threaded post is configured to be inserted through the mounting holes 20, 22 and fastened by the nut.

**Example 14:** the battery compartment 4 of any of examples 11-13, further comprising: at least one load distribution element 54, wherein the load distribution element 54 comprises at least one mounting hole 56, wherein the at least one mounting hole 56 of the load distribution element(s) 54 and the at least one support fixation point 52, 60, 62 are in alignment, and the fastener 24 fixes the load distribution element(s) 54 to the support element(s) 50, 58 such that the mounting flanges 16, 18 of the battery module pair are sandwiched between the load distribution element(s) 54 and the support surface(s) 51, 59.

**Example 15:** the battery compartment 4 of any of examples 11-14, comprising at least a first battery module pair 6 and a second battery module pair 7, wherein the first battery module pair 6 and the second battery module pair 7 are fixed to at least one shared support element 58.

**Example 16:** the battery compartment 4 of example 15, wherein the at least one shared support element 58 comprises at least one first support fixation point 60 and at least one second support fixation point 62, wherein the first battery module pair 6 is fixed via the first support fixation point(s) 60 and the second battery module pair 7 is fixed via the second support fixation point(s) 62.

**Example 17:** the battery compartment 4 of example 16, wherein the at least one second support fixation point 62 and at least one first support fixation point 60 are distanced from one another in a length direction of the battery module pair 6, 7, and wherein the first battery module pair 6 and the second battery module pair 7 are arranged on the shared support element 58 such that the mounting flanges 16, 18 of the first battery module pair 6 and of the second battery module pair 7 intermesh.

**Example 18:** the battery compartment 4 of any of examples 15-17, wherein the corresponding mounting elements 12, 14, 46, 48 of the first battery module pair 6 and the second battery module pair (7) are structurally identical.

**Example 19:** the battery compartment 4 of any of examples 11-18, further comprising: at least one opening 68 configured such that the battery module pair(s) 6, 7 may be inserted via the second battery module 10 thereof.

**Example 20:** a vehicle 2 comprising the battery compartment 4 according to any of examples 11-19

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module pair (6, 7) comprising;
- a first battery module (8), comprising at least one battery cell (42),
- a second battery module (10), comprising at least one battery cell (44),
wherein the first battery module (8) comprises at least a first mounting element (12, 46), and the second battery module comprises at least a second mounting element (14, 48), wherein each of said first mounting element (12, 46) and said second mounting element (14, 48) comprises at least one mounting flange (16 , 18), said mounting flange(s) (16, 18) extending outwards from a side surface (34, 35, 36, 37) of said first battery module (8) and said second battery module (10), respectively, and wherein each of said mounting flanges (16, 18) comprises at least one mounting hole (20, 22), wherein said first battery module (8), and said second battery module (10) are arranged such that the at least one mounting hole (20) of said at least first mounting element (12, 46) is in alignment with the at least one mounting hole (22) of said at least second mounting element (14, 48), and the first battery module (8) and the second battery module (10) are configured to be fixed in relation to each other at said mounting holes (20, 22) by a fastener (24) such that the mounting flange (16, 18) of each of the first mounting element (12, 46) and the second mounting element (14, 48) are mechanically coupled.

2. The battery module pair (6, 7) of claim 1, wherein the first mounting element (12, 46) and the second mounting element (14, 48) each further comprise a side carrier (30, 32), wherein said side carriers (30, 32) are configured to form the side surfaces (34, 35, 36, 37) of said first battery module (8) and said second battery module (10) .

3. The battery module pair (6, 7) of claim 2, wherein the mounting flanges (16, 18) extend at an angle to said side carriers (30, 32).

4. The battery module pair (6, 7) of any of claims 1-3, wherein the first battery module (8), and the second battery module (10) are arranged in a height direction of said battery module pair (6, 7).

5. The battery module pair (6, 7) of any of claims 1-4, wherein the first battery module (8), and the second battery module (10) are arranged in a width direction of said battery module pair (6, 7).

6. The battery module pair (6, 7) of claim 1-5, wherein the battery cell(s) (42) of said first battery module (8), and the battery cell(s) (44) of said second battery module (10) are arranged such that said battery cells (42, 44) are oriented in the same direction.

7. The battery module pair (6, 7) of claim 1-5, wherein the battery cells (42) of said first battery module (8), and the battery cells (44) of said second battery module (10) are arranged such that the battery cell(s) (42) of said first battery module (8) and the battery cell(s) (44) of said second battery module (10) are oriented in the opposite direction.

8. The battery module pair (6, 7) of any of claims 1-7, wherein the first battery module (8) comprises at least a first mounting element (12) and a further first mounting element (46), and the second battery module (10) comprises at least a second mounting element (14) and a further second mounting element (48), wherein the mounting flanges (16, 18) of the first mounting element (12) and the second mounting element (14) extend outwards from a first side surface (34, 36) of said first battery module (8) and said second battery module (10), respectively, and wherein the mounting flanges (16, 18) of the further first mounting element (46) and the further second mounting element (48) extend outwards from a second side surface (35, 37) of said first battery module (8) and said second battery module (10), respectively, and said first side surfaces (34, 36) are opposite to said second side surfaces (35, 37) in a width direction of said battery modules (8, 10).

9. A battery compartment (4) comprising at least one battery module pair (6, 7) according to any of claims 1-8 wherein said battery compartment (4) further comprises:
- at least one support element (50, 58) fixed in relation to said battery compartment (4), the at least one support element (50, 58) comprising a support surface (51, 59) having at least one support fixation point (52, 60, 62) formed thereon,
wherein the mounting holes (20, 22) of the battery module pair (6, 7) and the fixation point(s) (52, 60, 62) of the support element(s) (50, 58) are in alignment and said battery module pair (6, 7) is fixed to said support element(s) (50, 58) at least at one fixation point (52, 60, 62) by said fastener (24), such that the mounting flange(s) (18) of the second battery module (10) are sandwiched between the mounting flange(s) (16) of the first battery module (8) and the support surface (s) (51, 59).

10. The battery compartment (4) of claim 9, further comprising: at least one load distribution element (54), wherein said load distribution element (54) comprises at least one mounting hole (56), wherein the at least one mounting hole (56) of the load distribution element(s) (54) and the at least one support fixation point (52, 60, 62) are in alignment, and said fastener (24) fixes said load distribution element(s) (54) to said support element(s) (50, 58) such that the mounting flanges (16, 18) of the battery module pair are sandwiched between said load distribution element(s) (54) and said support surface(s) (51, 59).

11. The battery compartment (4) of any of claims 9-10, comprising at least a first battery module pair (6) and a second battery module pair (7), wherein said first battery module pair (6) and said second battery module pair (7) are fixed to at least one shared support element (58).

12. The battery compartment (4) of claim 11, wherein the at least one shared support element (58) comprises at least one first support fixation point (60) and at least one second support fixation point (62), wherein said first battery module pair (6) is fixed via said first support fixation point(s) (60) and said second battery module pair (7) is fixed via said second support fixation point(s) (62).

13. The battery compartment (4) of claim 12, wherein said at least one second support fixation point (62) and at least one first support fixation point (60) are distanced from one another in a length direction of said battery module pair (6, 7), and wherein said first battery module pair (6) and said second battery module pair (7) are arranged on said shared support element (58) such that said mounting flanges (16, 18) of the first battery module pair (6) and of the second battery module pair (7) intermesh.

14. The battery compartment (4) of any of claims 9-13, further comprising: at least one opening (68) configured such that the battery module pair(s) (6, 7) may be inserted via a height direction of said battery compartment (4).

15. A vehicle (2) comprising the battery compartment (4) according to any of claims 9-14.
